# EUROPÄISCHE PATENTSCHRIFT

(11) **EP 1 785 644 B1**
(45) Veröffentlichungstag und Bekanntmachung des Hinweises auf die Patenterteilung: **12.10.2011**
(21) Anmeldenummer: 06022271.8
(22) Anmeldetag: 25.10.2006
(51) Int. Cl.: F16H 25/20

(54) **Schnell verfahrender Gewindetrieb**
High speed screw drive
Dispositif d'entrainement à éléments filetés et haute vitesse de rotation

(30) Priorität: 11.11.2005 DE 102005054290
(43) Veröffentlichungstag der Anmeldung: 16.05.2007
(73) Patentinhaber: Bosch Rexroth Mechatronics GmbH, 97424 Schweinfurt (DE)
(72) Erfinder: Klein, Michael, 97506 Grafenrheinfeld (DE); Greubel, Roland, 97729 Ramsthal (DE)

(56) Entgegenhaltungen:
- DE-A1- 19 501 392
- DE-A1- 19 859 881
- DE-C1- 10 051 929

## Beschreibung

Die Erfindung betrifft ein Verfahren zum Betrieb eines Gewindetriebs gemäß dem Oberbegriff von Anspruch 1 und eine Vorrichtung zur Durchführung des Verfahrens.

Ein derartiges Verfahren ist beispielsweise aus der DE 19 859 881 oder aus der DE 198 21 763 A1 bekannt. Dort wird mit Bezug auf Fig. 12 die Problematik der biegekritischen Drehzahl beschrieben, nämlich der Effekt, dass der Gewindetrieb beim Erreichen dieser Drehzahl in Biegeschwingungen gerät, wodurch er beschädigt oder zerstört werden kann. Die biegekritische Drehzahl ist grundsätzlich abhängig von der nicht abgestützten Länge einer drehenden Welle. Bei einem Gewindetrieb, bei dem die Mutter quer zur Bewegungsrichtung abgestützt ist, ist diese Länge abhängig von der Mutterstellung entlang der Spindel. Die biegekritische Drehzahl ist wesentlich höher, wenn die Mutter in der Spindelmitte steht, als wenn sie in der Nähe eines Spindelendes steht. Die DE 198 21 763 A1 beschreibt als Stand der Technik ein Verfahren zum Betrieb eines Gewindetriebs (Spalte 10, Zeile 33ff), bei dem eine konstante Grenzdrehzahl für die Spindel entsprechend der ungünstigsten Stellung der Mutter bestimmt wird. Diese Drehzahl ist insbesondere bei langen Spindeln sehr niedrig, so dass sich sehr lange Verfahrzeiten der Mutter ergeben. Zur Lösung dieses Problems schlägt die DE 198 21 763 A1 Zwischenträger für die Spindel vor, durch die die biegekritische Drehzahl derselben erhöht wird.

Es ist Aufgabe der vorliegenden Erfindung, ein Verfahren gemäß dem Oberbegriff von Anspruch 1 anzugeben, bei dem eine kurze Verfahrzeit auf einfache Art und Weise erreicht wird. Diese Aufgabe wird durch die kennzeichnenden Merkmale des Anspruchs 1 gelöst.

Durch die Wahl der Spindeldrehzahl abhängig von der Stellung der Mutter und zwar immer knapp unterhalb der stellungsabhängigen Grenzdrehzahl, vorzugsweise der biegekritischen Drehzahl, können höhere Spindeldrehzahlen gefahren werden als im Stand der Technik. Dadurch verkürzen sich die Verfahrenzeiten der Mutter, ohne dass der Gewindetrieb durch Biegeschwingungen beschädigt werden kann.

Bei der konkreten Auswahl einer Spindeldrehzahl knapp unter der Grenzdrehzahl ist zu berücksichtigen, dass die biegekritische Drehzahl die Drehzahl ist, bei der die maximalen Biegeschwingungen an der Spindel auftreten. Man spricht auch vom Resonanzpunkt. Derartige Schwingungen treten aber auch in benachbarten Drehzahlbereichen auf, wenn auch in abgeschwächter Form. Es hat sich gezeigt, dass, wenn die Spindeldrehzahl aus einem Bereich zwischen 60% und 90% der Grenzdrehzahl, vorzugsweise zwischen 70% und 80% der Grenzdrehzahl, gewählt wird, keine Schwingungen auftreten, die den Gewindetrieb beschädigen können. Dies gilt nur, sofern als Grenzdrehzahl die kritische Drehzahl der Sp.indel maßgebend ist.

Die Grenzdrehzahl kann ggf. die kleinste Drehzahl aus einer Gruppe von Grenzdrehzahlen sein, welche
- die stellungsabhängige kritische Drehzahl der Spindel,
- die maximal zulässige Relativdrehzahl zwischen Spindel und Mutter und
- die maximal zulässige Drehzahl der Spindellagerung
enthält. Es hat sich gezeigt, dass die biegekritische Drehzahl bei kürzeren Spindeln im Mittelbereich der Spindel so hoch ist, dass andere Begrenzungen auftreten, die eine Reduzierung der Drehzahl erzwingen, um eine Beschädigung des Gewindetriebs zu verhindern. Insbesondere bei Wälzkörpergewindetrieben existiert eine maximal zulässige Relativdrehzahl zwischen Spindel und Mutter. Diese wird dadurch verursacht, dass die in endlosen Schleifen umlaufenden Wälzköper nicht mit beliebig hoher Geschwindigkeit durch die Umlenkvorrichtungen bewegt werden können. Aufgrund der engen Umlenkradien würden Zentrifugalkräfte auftreten, welche die Umlenkvorrichtungen zerstören würden. Auch die üblicherweise verwendeten Radialwälzlager zur Lagerung der Spindel weisen eine maximal zulässige Drehzahl auf, die aber nur in seltenen Fällen unterhalb der beiden vorstehend beschriebenen Grenzdrehzahlen liegt.

Weiter kann die Spindel von einem Motor, vorzugsweise einem Elektromotor, angetrieben sein. Auch ein Motor weist üblicherweise eine maximal zulässige Drehzahl auf. Zusammen mit der Übersetzung eines Getriebes, das ggf. zwischen Motor und Spindel angeordnet ist, ergibt sich daraus eine maximale Spindeldrehzahl, die in der Gruppe der Grenzdrehzahlen enthalten sein kann.

Die Grenzdrehzahlen neben der kritischen Drehzahl der Spindel können üblicherweise zu 100% ausgenutzt werden. In diesem Zusammenhang wird auf die Katalogangaben der betreffenden Hersteller verwiesen.

Das erfindungsgemäße Verfahren kann auf einfache Art und Weise mit einer Vorrichtung durchgeführt werden, die den eingangs beschriebenen Gewindetrieb, und
- Stellungsbestimmungsmittel für die Mutter
- Zuordnungsmittel, in der eine Zuordnung zwischen Mutterstellung und Spindeldrehzahl gespeichert ist, die das erfindungsgemäße Verfahren verwirklicht, und
- Drehzahlstellmittel für die Spindel
umfasst. Bei den Stellungsbestimmungsmitteln kann es sich beispielsweise um ein lineares Wegmesssystem handeln, das die Stellung der Mutter misst. Es kann aber auch ein Drehgeber vorgesehen sein, dessen Messwerte mittels einer Berechnungseinheit unter Berücksichtigung der Spindelsteigung in eine Mutterstellung umgerechnet werden.

Bei dem Drehzahlstellmittel für die Spindel handelt es sich vorzugsweise um einen Elektromotor, der mit einer Drehzahlsteuerung bzw. -regelung versehen ist. Diese wird mit den Ausgaben der Zuordnungsmittel gespeist. Der Motor kann ggf. über ein Getriebe mit der Spindel antriebsmäßig verbunden sein. Bei Verwendung eines Synchronmotors mit einer Drehzahlsteuerung kann die dort vorliegende Drehzahlinformation als Eingangsgröße für die Stellungsbestimmungsmittel verwendet werden.

Bei der Zuordnungsvorrichtung kann es sich beispielsweise um eine Rechenvorrichtung handeln, die aus den bekannten Formeln für die kritische Drehzahl anhand der Ausgabe der Stellungsbestimmungsmittel die Spindeldrehzahl berechnet. In diesem Fall sind die kennzeichnenden Merkmale des erfindungsgemäßen Verfahrens in Form der Formeln gespeichert.

Es kann aber auch vorgesehen sein, dass die Zuordriungsmittel eine Tabelle umfassen, die einzelnen vorgegebenen Mutterstellungen eine Spindeldrehzahl zuordnet, und Berechnungsmittel, welche die Spindeldrehzahl zwischen den vorgegebenen Mutterstellungen linear interpolieren. Diese Ausführungsform hat den Vorteil, dass sie einfach mit üblichen Universal: Maschinensteuerungen verwirklicht werden kann, weil keine komplizierten Berechnungen ausgeführt werden müssen.

Weiter kann eine speicherprogrammierbare Steuerung vorgesehen sein, die einen Fahrbefehl aufweist, der die Mutter unter Zuhilfenahme der Zuordnungsmittel verfährt. Beispielsweise kann in einer bekannten Steuerung einer Werkzeugmaschine ein Eilgangbefehl vorgesehen sein, der einen Maschinenschlitten, der von einem Gewindetrieb angetrieben wird, gemäß dem erfindungsgemäßen Verfahren verfährt. Ein Eilgangbefehl hat üblicherweise die Aufgabe, den Maschinenschlitten möglichst schnell von der aktuellen Position an eine Zielposition zu verfahren. Ein derartiger Befehl kann in einem Programm zur Herstellung eines Werkstücks, das vom Maschinenanwender erstellt und im Speicher der Steuerung hinterlegt wird, verwendet werden. Die vorgeschlagene Ausführungsform vereinfacht die Anwendung des erfindungsgemäßen Verfahrens durch den Maschinenanwender, da die erfindungsgemäße Drehzahlkurve nicht durch viele einzelne bekannte Eilgangbefehle mit konstanter Verfahrgeschwindigkeit angenähert werden muss.

Nachzutragen ist ferner, dass es sich bei dem Gewindetrieb vorzugsweise um einen vorgespannten Kugelgewindetrieb handelt. Dadurch wird die Spindel durch die Mutter spielfrei abgestützt. Somit ist sichergestellt, dass die Mutter ihre Funktion als zusätzliche Lagerstelle für die Spindel zur Vermeidung von Biegeschwingungen sicher erfüllen kann. Vor allem werden kleine Schwingungen innerhalb des Spielwegs vermieden, die bei einer andersartigen Ausgestaltung auftreten könnten und die ebenfalls zu einer Beschädigung des Gewindetriebs führen können.

Die Erfindung wird im Folgenden anhand der beigefügten Zeichnungen beschrieben werden. Es stellt dar:
- Fig. 1: eine grobschematische Darstellung einer erfindungsgemäßen Vorrichtung; und
- Fig. 2: ein Diagramm mit verschiedene Kurven, in denen die Spindeldrehzahlen n über die Mutterstellung x aufgetragen sind.

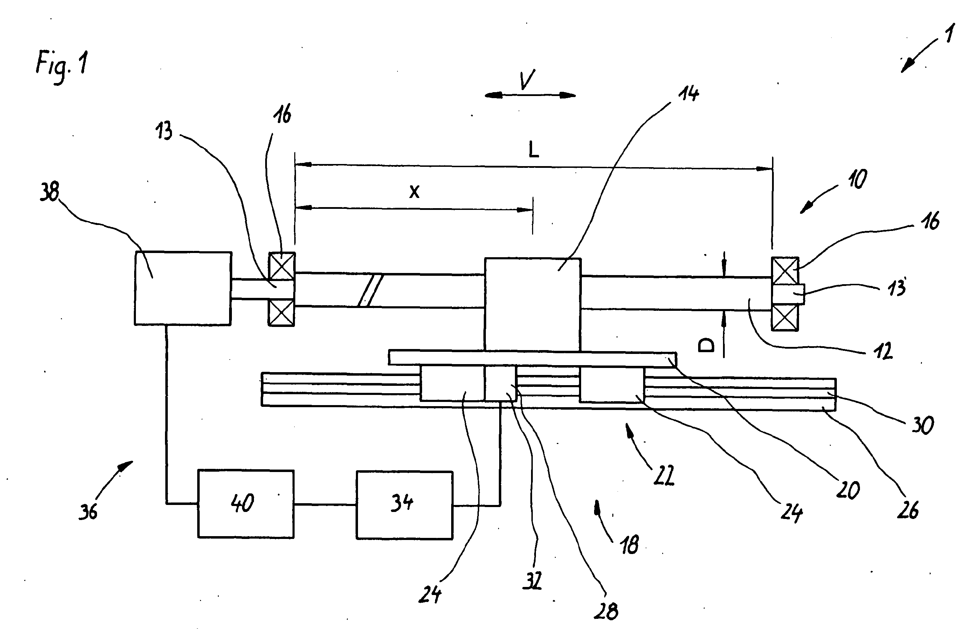

In Fig. 1 ist eine erfindungsgemäße Vorrichtung mit einem Gewindetrieb 10 allgemein mit 1 bezeichnet. Der Gewindetrieb 10, dessen Vorschubrichtung mit V gekennzeichnet ist, umfasst eine Spindel 12 und eine Mutter 14. Bei dem Gewindetrieb 10 handelt es sich um einen rechtsgängigen Kugelgewindetrieb mit folgender Spezifikation:

| | |
|---|---|
| Spindeldurchmesser (D): | 50 mm |
| Steigung: | 40 mm |
| Kugeldurchmesser: | 6,5 mm |
| Spindellänge (L): | 5000 mm |
| Vorspannklasse: | 3% der dynamischen Tragzahl |

Die Spindel ist an beiden Enden 13 mittels Lagern 14, nämlich Radialrillenkugellagern, drehbar gelagert. Die beiden Lager 14 sind als Festlager ausgeführt, d.h. beide Lager 14 lassen keine Bewegung der Spindelenden 13 in Vorschubrichtung V zu.

Die Mutter 14 ist quer zur Vorschubrichtung V an einer übergeordneten Baugruppe 18 abgestützt, die von einem Tisch 20, der auf einem Linearwälzlager 22 in Vorschubrichtung V beweglich gelagert ist, gebildet wird. Das Linearwälzlager 22 umfasst mehrere Führungswagen 24, die über nicht dargestellte endlos umlaufende Wälzkörperreihen an einer Führungsschiene 26 abgestützt sind.

An dem Linearwälzlager 22 ist ein Stellungsbestimmungsmittel 28 zur Bestimmung der Stellung x der Mutter 14 angebracht. Das Stellungsbestimmungsmittel 28 umfasst eine Maßverkörperung 30, die an der Führungsschiene 26 angebracht ist, und eine zugeordnete Abtastvorrichtung 32, die an einem der Führungswagen 24 angeordnet ist.

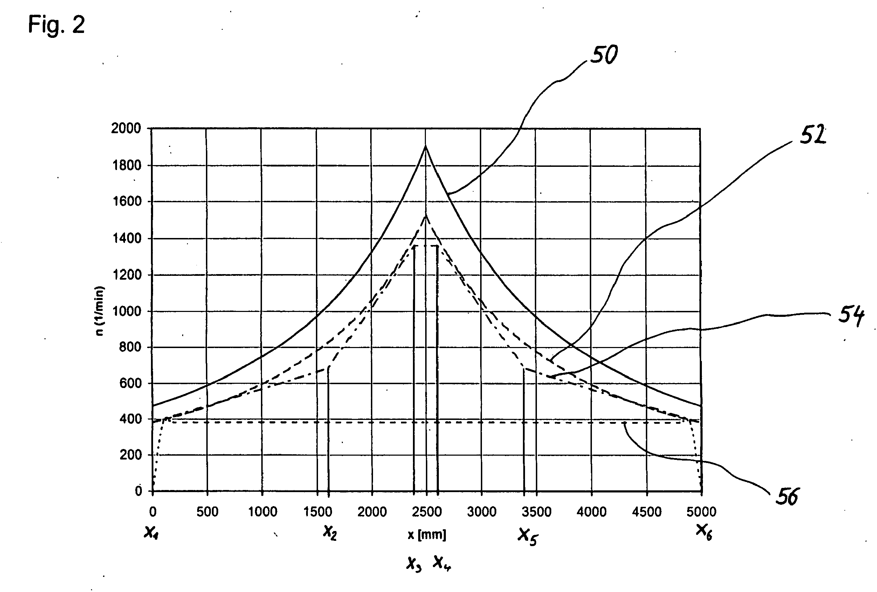

Die Mutterstellung x wird an Zuordnungsmittel 34 weitergegeben, in denen eine Zuordnung zwischen Mutterstellung x und Spindeldrehzahl n gespeichert ist, welche das erfindungsgemäße Verfahren verwirklicht. Die Zuordnungsmittel 34 umfassen eine Tabelle, in der einzelnen vorgegebenen Mutterstellungen x₁ bis x₆ feste Spindeldrehzahlen zugeordnet sind, die aus der Kurve 54 gemäß Fig. 2 zu entnehmen sind. Weiter sind Berechnungsmittel vorgesehen, welche die Spindeldrehzahl zwischen den vorgegebenen Mutterstellungen x₁ bis x₆ linear interpolieren, so dass sich die Zuordnung gemäß Kurve 54 aus Fig. 2 ergibt.

Die so ermittelte Spindeldrehzahl wird an Drehzahlstellmittel 36 weitergegeben, die einen Motor 38 und eine zugeordnete Steuerung 40 umfassen. Der Motor 38 ist mit einem Spindelende 13 antriebsmäßig verbunden.

In Fig. 2 sind verschiedene Kurven für die Spindeldrehzahl n in min⁻¹ über die Mutterstellung x in mm für den oben beschriebenen Gewindetrieb aufgetragen. Die Kurve 50 gibt die kritische Drehzahl der Spindel (12) an. Sie wurde gemäß den Angaben im Katalog "Rexroth-Kugelgewindetriebe - Endenlagerungen und Muttergehäuse", Best.Nr. R310DE 3001, Ausgabe 11/2004, Seite 120 ermittelt. Die maximale kritische Drehzahl beträgt 1900 min⁻¹ und ist damit kleiner als die maximal zulässige Relativdrehzahl zwischen Mutter und Spindel, die 3000 min⁻¹ beträgt. Die maßgebliche Grenzdrehzahl über die gesamte Spindellänge ist also die kritische Drehzahl.

In Kurve 52 ist die Spindeldrehzahl aufgetragen, die 80% der kritischen Drehzahl entspricht. Wenn diese Kurve in Zuordnungsmittel (34) eingespeichert wird, erhält man die kleinstmögliche Verfahrzeit, bei der sicher gewährleistet ist, dass der Kugelgewindetrieb (10) nicht beschädigt wird.

Die Kurve 54 wurde durch lineare Interpolation von unten an die Kurve 52 angenähert. Bei Verwendung der Kurve 54, wie oben beschrieben, ist somit ebenfalls sicher ausgeschlossen, dass der Kugelgewindetrieb beschädigt wird. Die Verfahrzeit zum Verfahren der Mutter über die gesamte Spindellänge beträgt bei Verwendung dieser Kurve 11,6s.

Zum Vergleich ist in Kurve 56 der Drehzahlverlauf gemäß dem eingangs beschrieben Verfahren aus dem Stand der Technik aufgezeigt. Die Verfahrzeit beträgt in diesem Fall 19,7s. Sie ist somit etwa 70% länger als die Verfahrzeit gemäß dem erfindungsgemäßen Verfahren. Diese Zeitersparnis wird ohne aufwändige mechanische Veränderungen am Gewindetrieb erreicht.

### Bezugszeichenliste

- L: Spindellänge
- D: Spindeldurchmesser
- V: Vorschubrichtung
- x: Mutterstellung
- xᵢ: vorgegebene Mutterstellungen
- n: Drehzahl der Spindel

- 1: Vorrichtung
- 10: Gewindetrieb
- 12: Spindel
- 13: Spindelende
- 14: Mutter
- 16: Lager
- 18: übergeordnete Baugruppe
- 20: Tisch
- 22: Linearwälzlager
- 24: Führungswagen
- 26: Führungsschiene
- 28: Stellungsbestimmungsmittel
- 30: Maßverkörperung
- 32: Abtastvorrichtung
- 34: Zuordnungsmittel
- 36: Drehzahlstellmittel
- 38: Motor
- 40: Steuerung

- 50: kritische Drehzahl der Spindel
- 52: berechnete Drehzahl der Spindel
- 54: linear interpolierte Drehzahl der Spindel
- 56: Drehzahl der Spindel gemäß Stand der Technik

## Patentansprüche

1. Verfahren zum Betrieb eines Gewindetriebs (10) mit
- einer Spindel (12), die an wenigstens einem Ende (13) drehbar gelagert ist, und
- einer Mutter (14), die von der Spindel (12) in einer Vorschubrichtung (V) antreibbar ist, wobei die Mutter (14) quer zur Vorschubrichtung (V) an einer übergeordneten Baugruppe (18) abgestützt ist,
**dadurch gekennzeichnet, dass** die Spindeldrehzahl (n) abhängig von der Stellung (x) der Mutter (14) so gewählt wird, dass sie knapp unterhalb einer stellungsabhängigen Grenzdrehzahl liegt.

2. Verfahren nach Anspruch 1,
**dadurch gekennzeichnet, dass** die Grenzdrehzahl die kleinste Drehzahl einer Gruppe von Grenzdrehzahlen ist, welche die stellungsabhängige kritische Drehzahl der Spindel (12) enthält.

3. Verfahren nach Anspruch 2,
**dadurch gekennzeichnet, dass** die Gruppe von Grenzdrehzahlen
- die maximal zulässige Relativdrehzahl zwischen Spindel (12) und Mutter (14) und
- die maximal zulässige Drehzahl der Spindellagerung (16) enthält.

4. Verfahren nach Anspruch 2 oder 3,
**dadurch gekennzeichnet, dass** die Spindel (12) von einem Motor (38) angetrieben wird, wobei die Gruppe der Grenzdrehzahlen die maximal zulässige Spindeldrehzahl, die sich aus der maximal zulässigen Motordrehzahl ergibt, enthält.

5. Verfahren nach einem der vorherigen Ansprüche,
**dadurch gekennzeichnet, dass** die Spindeldrehzahl (n) in einem Bereich zwischen 60% und 90% der Grenzdrehzahl und vorzugsweise zwischen 70% und 80% der Grenzdrehzahl liegt, falls die maßgebende Grenzdrehzahl die kritische Drehzahl der Spindel (12) ist.

6. Vorrichtung zur Durchführung eines Verfahrens nach einem der vorstehenden Ansprüche, mit einem Gewindetrieb gemäß dem Oberbegriff von Anspruch 1
**dadurch gekennzeichnet, dass**
- Stellungsbestimmungsmittel (28) für die Mutter (14)
- Zuordnungsmittel (34), in der eine Zuordnung zwischen Mutterstellung (x) und Spindeldrehzahl (n) gespeichert ist, welche die kennzeichnenden Merkmale einer der Ansprüche 1 bis 5 erfüllt, und
- Drehzahlstellmittel (36) für die Spindel (12) vorgesehen sind.

7. Vorrichtung nach Anspruch 6,
**dadurch gekennzeichnet, dass** die Zuordnungsmittel (34) eine Tabelle umfassen, die einzelnen vorgegebenen Mutterstellungen (x₁ bis x₆) eine Spindeldrehzahl zuordnet, und Berechnungsmittel, welche die Spindeldrehzahl zwischen den vorgegebenen Mutterstellungen (x₁ bis x₆) linear interpolieren.

8. Vorrichtung nach Anspruch 6 oder 7,
**dadurch gekennzeichnet, dass** eine speicherprogrammierbare Steuerung (40) vorgesehen ist, die einen Fahrbefehl aufweist, der die Mutter unter Zuhilfenahme der Zuordnungsmittel (34) verfährt.

9. Vorrichtung nach einem der Ansprüche 6 bis 8,
**dadurch gekennzeichnet, dass** der Gewindetrieb (10) ein vorgespannter Wälzkörpergewindetrieb ist.

## Claims

1. Method for operating a screw drive (10), having
- a spindle (12) which is rotatably mounted at at least one end (13), and
- a nut (14) which can be driven by the spindle (12) in a feed direction (V), the nut (14) being supported transverse to the feed direction (V) on a higher assembly (18),
**characterized in that** the spindle speed (n) is selected as a function of the position (x) of the nut (14) such that it lies just below a position-dependent limit speed.

2. Method according to Claim 1, **characterized in that** the limit speed is the lowest speed of a group of limit speeds which includes the position-dependent critical speed of the spindle (12).

3. Method according to Claim 2, **characterized in that** the group of limit speeds
- includes the maximum permissible relative speed between spindle (12) and nut (14) and
- includes the maximum permissible speed of the spindle bearing (16).

4. Method according to Claim 2 or 3, **characterized in that** the spindle (12) is driven by a motor (38), the group of the limit speeds including the maximum permissible spindle speed, which results from the maximum permissible motor speed.

5. Method according to one of the preceding claims, **characterized in that** the spindle speed (n) lies in a range between 60% and 90% of the limit speed, and preferably between 70% and 80% of the limit speed, if the decisive limit speed is the critical speed of the spindle (12).

6. Device for carrying out a method according to one of the preceding claims, having a screw drive in accordance with the preamble of Claim 1, **characterized by** the provision of
- position-determining means (28) for the nut (14),
- assigning means (34) in which there is stored an assignment between nut position (x) and spindle speed (n) which fulfils the characterizing features of one of Claims 1 to 5, and
- speed-controlling means (36) for the spindle (12).

7. Device according to Claim 6, **characterized in that** the assigning means (34) comprise a table which assigns a spindle speed to individual prescribed nut positions (x₁ to x₆), and calculating means which linearly interpolate the spindle speed between the prescribed nut positions (x₁ to x₆) .

8. Device according to Claim 6 or 7, **characterized in that** a stored-programme control (40) is provided which has a travel command which moves the nut with the assistance of the assigning means (34).

9. Device according to one of Claims 6 to 8, **characterized in that** the screw drive (10) is a prestressed rolling-body screw drive.

## Revendications

1. Procédé d'exploitation d'un dispositif d'entraînement à éléments filetés (10) douté :
- d'un arbre (12) disposé de façon à pouvoir tourner au niveau d'au moins une extrémité (13) ; et
- d'un écrou (14) entraîné par l'arbre (12) dans une direction d'avancement (V), l'écrou (14) étant soutenu transversalement à la direction d'avancement (V) au niveau d'un module maître (18) ;
**caractérisé en ce que** la vitesse de rotation de l'arbre (n) est choisie en fonction de la position (x) de l'écrou (14), de telle sorte qu'elle se situe juste en dessous d'une vitesse de rotation limite dépendant de la position.

2. Procédé selon la revendication 1, **caractérisé en ce que** la vitesse de rotation limite est la plus petite vitesse de rotation d'un groupe de vitesses de rotation limites contenant la vitesse de rotation de l'arbre (12) critique dépendant de la position.

3. Procédé selon la revendication 2, **caractérisé en ce que** le groupe de vitesses de rotation limites continent :
- la vitesse de rotation relative maximale autorisée entre l'arbre (12) et l'écrou (14) ; et
- la vitesse de rotation maximale autorisée du palier de l'arbre (16).

4. Procédé selon la revendication 2 ou 3, **caractérisé en ce que** l'arbre (12) est entraîné par un moteur (38), le groupe de vitesses de rotation limites contenant la vitesse de rotation maximale autorisée de l'arbre pouvant être obtenue à la vitesse de rotation maximale autorisée du moteur.

5. Procédé selon l'une quelconque des revendications précédentes, **caractérisé en ce que** la vitesse de rotation de l'arbre (n) se situe dans une plage comprise entre 60 % et 90 % de la vitesse de rotation limite et de préférence entre 70 % et 80 % de la vitesse de rotation limite, lorsque la vitesse de rotation limite prévalant est la vitesse de rotation critique de l'arbre (12).

6. Dispositif de mise en oeuvre d'un procédé selon l'une quelconque des revendications précédentes, équipé d'un dispositif d'entraînement à éléments filetés selon le préambule de la revendication 1, **caractérisé en ce que** l'on prévois :
- des moyens de détermination de position (28) pour l'écrou (14) ;
- des moyens d'association (34) dans lesquels l'association entre la position d'écrou (x) et la vitesse de rotation de l'arbre (n) est mémorisée, lesdits moyens répondant aux caractéristiques caractérisantes d'une des revendications 1 à 5 ; et
- des moyens de réglage de la vitesse de rotation (36) pour l'arbre (12).

7. Dispositif selon la revendication 6, **caractérisé en ce que** les moyens d'association (34) comprennent un tableau qui associe à des positions d'écrou (x₁ à x₆) individuellement prédéfinies une vitesse de rotation de l'arbre et des moyens de calcul qui interpolent de façon linéaire la vitesse de rotation de l'arbre entre les positions d'écrou prédéfinies (x₁ à x₆) .

8. Dispositif selon la revendication 6 ou 7, **caractérisé en ce qu'**un élément de commande (40) à mémoire programmable est prévu, qui présente un ordre de déplacement qui permet de déplacer l'écrou en s'aidant des moyens d'association (34).

9. Dispositif selon l'une quelconque des revendications 6 à 8, **caractérisé en ce que** le dispositif d'entraînement à éléments filetés (10) est un dispositif d'entraînement à éléments filetés à corps de roulement précontraint.
